# FASCICULE DE BREVET EUROPEEN

(11) **EP 1 561 307 B1**
(45) Date de publication et mention de la délivrance du brevet: **26.07.2006**
(21) Numéro de dépôt: 03776957.7
(22) Date de dépôt: 06.10.2003
(51) Int. Cl.: H04L 12/28, H04L 12/56

(54) **FOURNITURE DE SERVICES**
DIENSTBEREITSTELLUNG
PROVISION OF SERVICES

(30) Priorité: 13.11.2002 FR 0214210
(43) Date de publication de la demande: 10.08.2005
(73) Titulaire: FRANCE TELECOM, 75015 Paris (FR)
(72) Inventeur: MOUCHEL LA FOSSE, Jean-Pierre, F-78114 Magny Les Hameaux (FR)
(74) Mandataire: Loisel, Bertrand
(86) Numéro de dépôt international: PCT/FR2003/002928
(87) Numéro de publication internationale: WO 2004/047369

(56) Documents cités:
- WO-A-01/86881

## Description

La présente invention concerne les techniques de médiation de services en ligne.

Elle concerne en particulier des services de contenu pouvant être fournis par l'intermédiaire de réseaux cellulaires de radiocommunication de troisième génération (3G) de type UMTS ("Universal Mobile Télécommunications System"). Elle intéresse plus généralement des fournisseurs de services Internet (ISP, "Internet Service Providers"), que l'accès des abonnés soit par radio, par fil ou autre. On utilisera ci-après le terme "services 3G" pour désigner les services concernés par l'invention, sans que ceci soit limitatif.

La valorisation de ces services est d'une mise au point délicate. Les fournisseurs de services mettent en place un Système d'information (SI) pour s'occuper de leurs abonnés et de leur facturation (CC&B, "Customer Care and Billing"). Ces SI leur apportent la capacité de valoriser les services 3G avec un grand nombre de métriques disponibles afin de différencier ces services en termes de valorisation et de facturation.

Pour cela, les industriels proposent des plates-formes souvent désignées sous le terme "SCP-Like Content Mediation", pour assurer une médiation de contenu de type SCP (terminologie de réseau intelligent, en français PCS: "point de commande de service"). Parmi ces industriels figurent les sociétés NARUS, ENITION, VoluBill, P-Cube, etc.

Ces plates-formes assurent toutes une fonctionnalité d'analyse et de supervision des paquets IP ("Internet Protocol") échangés dans le cadre des sessions de services 3G initiées par l'utilisateur d'un terminal 3G ou d'un poste connecté à Internet. Elles ont la capacité d'analyser les informations encapsulées dans les paquets IP jusqu'à la couche 7 (Application) du modèle OSI d'architecture protocolaire. Ceci leur permet d'appliquer des métriques de valorisation tenant compte des adresses IP, des ports TCP ("Transmission Control Protocol"), des ressources URL ("Uniform Resource Locator"), etc.

Ces plates-formes s'intègrent généralement au même endroit dans le domaine SI du CC&B: entre le noeud d'extrémité du réseau d'accès (cellulaire 3G ou fixe), et le premier noeud du réseau IP hébergeant des services 3G (réseau d'ISP ou réseau Internet). Ce premier noeud d'entrée dans le réseau IP des services 3G est le plus souvent un "portail" de services 3G. Un exemple est fourni dans WO 0186881.

Certaines de ces plates-formes, par exemple la plate-forme dite "NetToll" commercialisée par la société ENITION, ont une fonctionnalité permettant au fournisseur de services 3G d'être autonome dans la phase de création de ses services 3G. Un protocole (appelé "NetPolicy" dans le cas de la plate-forme "NetToll") permet au fournisseur de services 3G de définir et créer l'ensemble des données constituant le modèle d'information de son nouveau service 3G. Le fournisseur de services 3G crée ainsi lui même l'ensemble des données relatives au nouveau service dans la base de données constituant le référentiel de services de la plate-forme "SCP-Like Content Mediation".

Pour la valorisation des services 3G, les problèmes les plus difficiles à résoudre dans ce domaine SI du CC&B viennent:
- de l'impossibilité actuelle de garantir une qualité de service (QoS, "Quality of Service") complètement déterministe pour la "livraison" des services 3G;
- du caractère "multi-session" des technologies supportant ces services (UMTS et ses évolutions, ou réseaux fixés IP). Cela veut dire, par exemple, que l'utilisateur final d'un terminal 3G (téléphone portable, assistant numérique personnel, etc.) peut établir plusieurs sessions de services 3G se déroulant en parallèle.

Tout mécanisme qui contribue à améliorer la QoS perçue par l'utilisateur qui établit des sessions de services 3G est souhaitable pour faciliter le décollage jusqu'alors retardé des services 3G.

Un problème particulier est celui de la perception par l'utilisateur final de certaines interruptions de communication qui peuvent être provoquées pour diverses raisons. En l'absence de précaution particulière, une telle interruption risque d'être perçue de façon très brutale par le client, ce qui peut le décourager de souscrire à ce genre de services. Le succès d'un nouveau service 3G risque d'être compromis s'il met en jeu des circonstances où une telle interruption brutale est particulièrement désagréable par le client (par exemple s'il ne sait pas si son compte en banque a été débité).

Les situations de décision d'interruption de sessions de services 3G comprennent notamment les suivantes:
- la détection par le système de valorisation ("Rating System") de ce qu'un seuil nul est atteint sur le compte associé à la valorisation d'un service (par exemple, le compte associé à la valorisation de la partie transport des services);
- certaines obligations légales, telles que la protection de personnes mineures vis-à-vis de comportements "addictifs" qui les poussent à une consommation excessive;
- pour les entreprises, des besoins de protection et de contrôle de la consommation de services 3G de type "entreprises" par leur collaborateurs nomades ou sédentaires...

Un but de la présente invention est de proposer un mécanisme propre à améliorer l'ergonomie des services en ligne, notamment dans des cas d'interruption involontaire de communication.

L'invention propose ainsi un procédé de fourniture de services en ligne, dans lequel en particulier une plate-forme de supervision de sessions de service est placée entre un réseau d'accès et un noeud d'entrée d'un réseau d'hébergement de services. Ce procédé comprend les étapes suivantes en relation avec au moins un service :
- définir a priori, dans le déroulement dudit service, au moins une section atomique consistant en une séquence d'événements déterminée intervenant dans des échanges de messages avec un abonné, et identifier un premier événement au début de la section atomique et au moins un second événement à la fin de la section atomique ; et
- configurer la plate-forme de supervision pour qu'elle détecte les événements identifiés dans une session dudit service en cours pour un abonné par l'intermédiaire du réseau d'accès et signale un début de section atomique pour ledit abonné en réponse à la détection du premier événement et une fin de section atomique pour ledit abonné en réponse à la détection d'un second événement.

Selon l'invention, une requête d'interruption de communication d'un abonné est traitée en examinant si une section atomique est en cours pour ledit abonné d'après les débuts et fins de section atomique signalés par la plate-forme de supervision afin de décider si la communication doit au moins en partie être immédiatement interrompue, c'est-à-dire s'il faut interrompre immédiatement une partie ou la totalité des sessions en cours.

Si un service est interrompu au milieu d'une séquence formant un tout sémantiquement homogène et significatif, ce service est perçu comme altéré et abandonné dans un état indéterminé par son client. Plus précisément, une analyse plus approfondie montre que de nombreux exemples de services 3G contiennent ainsi des séquences non interruptibles sans dommage du point de vue de la QoS perçue par son consommateur.

Une telle séquence est appelée ici "section atomique" pour faire référence au vocabulaire des techniques de traitement informatique transactionnel, où l'atomicité d'une transaction signifie qu'elle doit être considérée comme une opération indivisible, qui ne peut que s'exécuter entièrement, ou à défaut être annulée entièrement.

Les sections atomiques ne concernent pas nécessairement la totalité des services accessibles par le réseau d'hébergement, mais seulement ceux de ces services pour lesquels existent des séquences où intervient la notion d'atomicité.

A titre d'exemple, les services utilisant des enchères se déroulent suivant un schéma générique comprenant généralement les étapes suivantes:
A/ le serveur applicatif d'enchères propose ses enchères;
B/ le client notifie son désir de faire une offre d'enchère et envoie un message pour "déposer" son enchère;
C/ le serveur applicatif d'enchères notifie au client le "dépôt" de l'enchère tel qu'il a été reçu, et demande la confirmation de cette enchère par le client;
D/ le client envoie sa confirmation;
E/ le serveur notifie la "clôture" de l'enchère déposée et confirmée par le client;
F/ ultérieurement, le serveur notifie au client le résultat de son enchère.

Dans cette succession d'étapes, on peut remarquer que, depuis l'étape B/ jusqu'à l'étape E/, toute interruption de la session supportant ce service d'enchères sera perçue de façon brutale par le client. Souvent, ce client ne saura pas le statut exact de l'enchère telle qu'elle sera traitée par le serveur applicatif. Une telle incertitude est de nature à lui faire rejeter le service.

Pour ce service d'enchères, on peut donc qualifier de section atomique la séquence d'événements allant de l'étape B/ jusqu'à l'étape E/. Une plate-forme de supervision, par exemple de type "SCP-like content mediation", peut être conçue et configurée selon l'invention pour détecter de tels événements, par exemple en examinant jusqu'à la couche application les paquets IP échangés avec le client au cours de la session, et les signaler pour que les requêtes d'interruption susceptibles de se produire soient traitées à bon escient.

Ce traitement des requêtes d'interruption mettant en jeu les sections atomiques peut être effectué dans le SI du CC&B à différents niveaux: opérateur du réseau d'accès, ISP, fournisseur de contenu, agrégateur de contenus, hébergeur de sites, etc., selon que ces acteurs effectuent ou non la valorisation d'une certaine partie du service tel que délivré.

Dès la phase de conception d'un service 3G, le concepteur est normalement capable d'identifier toutes les sections atomiques de ce service. De plus, il est en mesure de déterminer quel événement ou action constitue l'entrée dans une section atomique, et quel événement ou action caractérise la sortie de la section atomique, et donc de définir les paramètres utilisés dans le procédé. Le procédé procure ainsi au développeur de services 3G une boîte à outils qui lui permet, en fonction de la sémantique de son service, de paramétrer la plate-forme de supervision pour éviter les interruptions intempestives du service.

On peut estimer que la plupart des services 3G de commerce en ligne contiennent cette notion de section atomique et bénéficient donc potentiellement de l'invention. C'est aussi le cas pour d'autres services, notamment multimédia.

La communication sur laquelle porte la décision, prise en considération de l'existence ou non d'une section atomique pour l'abonné, peut se rapporter à la totalité des sessions en cours pour cet abonné ou à une partie seulement de ces sessions. Si la requête porte sur l'interruption d'une session seulement, l'examen de la condition de section atomique peut se limiter à la session en question.

Fréquemment, la requête portera sur l'ensemble des sessions, par exemple parce qu'elle émanera de la valorisation du transport des services. S'il y a une section atomique en cours dans une session d'un service, cette session pourra être maintenue (provisoirement) alors que les éventuelles autres sessions en cours (sans section atomique à l'instant considéré) pourront être interrompues immédiatement. Le gestionnaire pourrait aussi décider de maintenir ces autres sessions en cours, notamment si elles se rapportent à des services apparentés.

Le gestionnaire de contextes peut notamment respecter une organisation hiérarchique des services prise en compte par des organes de valorisation des services. On connaît par exemple, dans certains systèmes, la notion de "cône de services" correspondant à un ensemble de services susceptibles d'entrer en jeu dans le cadre d'une session d'un service donné (sommet du cône). Par exemple, le service de transport peut être vu comme le sommet d'un cône constitué par les services transportés. Un de ces services transportés peut lui-même être le sommet d'un cône, c'est-à-dire que dans son déroulement, il peut offrir d'accéder ou renvoyer à d'autres services dépendants (appartenant à ce cône). Dans une réalisation de l'invention, le traitement d'une requête d'interruption d'un service S comporte ainsi une analyse par le gestionnaire de contextes des sections atomiques existant éventuellement pour des sessions d'un service quelconque appartenant au plus petit des cônes emboîtés incluant ce service S, et le maintien provisoire des sessions en cours pour les services de ce plus petit cône s'il existe une telle section atomique. Les données spécifiant ce cône peuvent être accessibles au moins en partie au gestionnaire de contextes pour qu'il puisse effectuer cette analyse. Cette analyse de la hiérarchie des services peut aussi être prise en charge par l'entité à l'origine de la requête d'interruption, qui sélectionne de façon correspondante les sessions ou les services dont l'interruption est requise.

Un autre aspect de la présente invention se rapporte à un système de contrôle de services en ligne, comprenant une plate-forme de supervision de sessions de service placée entre un réseau d'accès et un noeud d'entrée d'un réseau d'hébergement de services, et un gestionnaire de contextes pour communiquer avec différentes unités fonctionnelles incluant la plate-forme de supervision afin de mémoriser des informations sur des sessions de service en cours pour des abonnés par l'intermédiaire du réseau d'accès. Au moins une section atomique consistant en une séquence d'événements déterminée intervenant dans des échanges de messages avec un abonné est définie a priori dans le déroulement d'au moins un service en identifiant un premier événement au début de la section atomique et au moins un second événement à la fin de la section atomique. La plate-forme de supervision comprend des moyens pour détecter les événements identifiés dans une session dudit service en cours pour un abonné par l'intermédiaire du réseau d'accès et pour signaler au gestionnaire de contextes un début de section atomique pour ledit abonné en réponse à la détection du premier événement et une fin de section atomique pour ledit abonné en réponse à la détection d'un second événement. Le gestionnaire de contextes comprend des moyens pour tenir à jour un indicateur de section atomique mémorisé pour chaque abonné sur la base des débuts et fins de section atomique signalés par la plate-forme de supervision et pour traiter une requête d'interruption de communication d'un abonné en fonction de l'indicateur de section atomique mémorisé pour ledit abonné afin de décider si la communication doit au moins en partie être immédiatement interrompue.

Un autre aspect de la présente invention se rapporte à une plate-forme de supervision de sessions de service pour un système de contrôle de services en ligne, comprenant:
- des moyens de raccordement d'une part à un réseau d'accès et d'autre part à un noeud d'entrée d'un réseau d'hébergement de services;
- des moyens pour recevoir des éléments de spécification d'au moins une section atomique dans au moins un service en ligne, consistant en une séquence d'événements déterminée intervenant dans des échanges de messages avec un abonné dans le déroulement d'au moins un service, lesdits éléments de spécification décrivant un premier événement au début de la section atomique et au moins un second événement à la fin de la section atomique;
- des moyens d'analyse de trafic transitant entre le réseau d'accès et le noeud d'entrée du réseau d'hébergement de services pour détecter lesdits premier et second événements dans une session dudit service en cours pour un abonné par l'intermédiaire du réseau d'accès; et
- des moyens de communication avec un gestionnaire de contextes mémorisant des informations sur des sessions de service en cours pour des abonnés par l'intermédiaire du réseau d'accès, incluant au moins un indicateur de section atomique, pour signaler au gestionnaire de contextes un début de section atomique pour ledit abonné en réponse à la détection du premier événement et une fin de section atomique pour ledit abonné en réponse à la détection d'un second événement.

Un autre aspect de la présente invention se rapporte à un gestionnaire de contextes pour un système de contrôle de services en ligne, comprenant:
- des moyens de communication avec différentes unités fonctionnelles incluant une plate-forme de supervision de sessions de service placée entre un réseau d'accès et un noeud d'entrée d'un réseau d'hébergement de services;
- des moyens de mémorisation d'informations sur des sessions de service en cours pour des abonnés par l'intermédiaire du réseau d'accès, lesdites informations incluant, pour au moins une session de service en cours pour un abonné, un indicateur de section atomique tenu à jour sur la base de débuts et fins de section atomique signalés par la plate-forme de supervision ; et
- des moyens de traitement d'une requête d'interruption de communication d'un abonné en fonction de l'indicateur de section atomique mémorisé pour ledit abonné afin de décider si la communication doit au moins en partie être immédiatement interrompue.

Le développeur pourra également, à l'aide de cet agent, définir une durée maximum considérée comme normale pour une section atomique donnée.

Un autre aspect de la présente invention se rapporte à un agent logiciel pour un développeur de services en ligne, comprenant des instructions pour effectuer les opérations suivantes lors d'une exécution de l'agent logiciel dans une machine informatique communiquant avec une plate-forme de supervision de sessions de service placée entre un réseau d'accès et un noeud d'entrée d'un réseau d'hébergement de services:
- définition, dans le déroulement d'un service, d'au moins une section atomique consistant en une séquence d'événements déterminée intervenant dans des échanges de messages avec un abonné;
- identification d'un premier événement au début de la section atomique et au moins un second événement à la fin de la section atomique ; et
- configuration de la plate-forme de supervision pour qu'elle détecte les événements identifiés dans une session dudit service en cours pour un abonné par l'intermédiaire du réseau d'accès et signale un début de section atomique pour ledit abonné en réponse à la détection du premier événement et une fin de section atomique pour ledit abonné en réponse à la détection d'un second événement.

D'autres particularités et avantages de la présente invention apparaîtront dans la description ci-après d'exemples de réalisation non limitatifs, en référence aux dessins annexés, dans lesquels :
- la figure 1 est un schéma d'un système selon l'invention et de son environnement;
- la figure 2 est un diagramme illustrant des opérations mises en oeuvre dans un exemple de système selon l'invention pour tenir à jour un indicateur de section atomique; et
- la figure 3 est un organigramme d'une procédure de traitement d'une requête d'interruption de communication utilisable dans un système selon l'invention.

Dans l'application de l'invention décrite ci-après, les services considérés sont des services 3G rendus à des abonnés par l'intermédiaire d'un réseau d'accès 1 de type UMTS. On comprendra que la technologie d'accès à disposition des abonnés peut en fait être quelconque (réseau local ou étendu, filaire ou non, ...).

Un réseau radio cellulaire de troisième génération de type UMTS comprend d'une part un réseau coeur 2 et d'autre part un réseau d'accès radio 3. Le réseau coeur 2 présente des similitudes avec la technologie GPRS ("Generalized Packet Radio Service"), et comporte ainsi un ensemble de commutateurs maillés appelés GSN ("GPRS Support Node") incluant des noeuds de desserte 4, ou SGSN ("Serving GSN"), reliés au réseau d'accès radio 3 et des noeuds passerelle 5, ou GGSN ("Gateway GSN"), reliés à des réseaux externes tels que des réseaux de fourniture de service en ligne ou l'Internet. Certains des commutateurs du réseau coeur sont reliés à une base de données d'abonnés 6 (HLR, "Home Location Register") servant à la gestion des abonnés mobiles du réseau cellulaire. Le réseau d'accès radio 3, par exemple de type UTRAN ("UMTS Terrestrial Radio Access Network"), se compose de stations de base radio 7 réparties sur la zone de couverture du réseau pour offrir des liens radio avec les terminaux 3G 8 et d'organes 9 de contrôle des stations de base reliés à des SGSN 4.

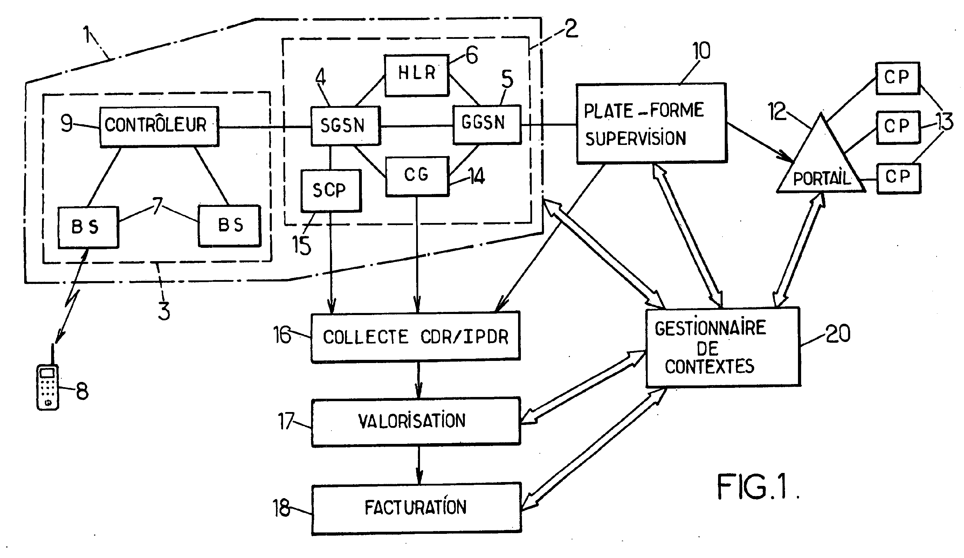

A l'interface entre un GGSN 5 et un réseau externe, il est courant de trouver une plate-forme de supervision de sessions de service 10 de type "SCP-Like Content Mediation". Dans l'exemple représenté sur la figure 1, cette plate-forme 10 est placée entre le GGSN 5 et un portail Internet 12 donnant accès à services proposés par divers fournisseurs de contenu 13 (CP, "Content Provider").

Les terminaux 3G sont aptes à fonctionner selon le protocole IP. Le premier routeur que voient les terminaux des abonnés de l'opérateur gérant le portail est le GGSN 5. Le trafic IP supervisé échangé par ces terminaux 8 passe ainsi par la plate-forme de supervision 10 qui est en mesure de détecter toutes sortes d'événements dans ce trafic. Les événements pris en compte sont programmables et la plate-forme 10 offre au développeur de services les outils de programmation lui permettant de configurer ces événements et les comportements à adopter lorsqu'ils sont détectés.

De façon classique, les commutateurs du réseau coeur 2 sont reliés à des organes de valorisation du service cellulaire, soit directement, soit par l'intermédiaire d'une passerelle d'imputation 14 (CG, "Charging Gateway"), soit par l'intermédiaire d'un point de commande de service 15 (SCP) d'une architecture de réseau intelligent. Ces organes de valorisation comprennent par exemple une unité 16 de collecte des enregistrements de détails d'appel (CDR, "Call Detail Record") issus du réseau coeur 2 et/ou des enregistrements de détails (IPDR, "IP Detail Record") résultant de l'analyse du trafic IP effectuée par la plate-forme de supervision 10, un système de valorisation 17 qui génère des données comptables à partir des CDR et IPDR collectés, et un système de facturation 18 pour produire les factures des clients à partir des éléments de valorisation fournis par le système 17.

La plate-forme de supervision 10 de type "SCP-like content mediation" est dotée des capacités de mise en oeuvre de l'ensemble ou de la plupart des métriques représentatives de la valorisation des services 3G. Elle est génératrice de CDR, d'IPDR ou de tout autre format d'enregistrement destiné au système de valorisation 17.

Dans certains cas, les organes de valorisation peuvent provoquer une interruption du service de transport des informations pour un abonné mobile donné. Cela peut par exemple se produire lorsque le système de valorisation 17 détecte qu'un seuil nul a été atteint dans le compte associé à la valorisation du transport des sessions de services 3G pour l'abonné. De telles interruptions peuvent aussi se produire à la demande d'autres composants CC&B.

D'autres cas de requêtes d'interruption peuvent être induits par des organes de valorisation prenant en compte des services 3G. En particulier, des requêtes d'interruption peuvent prendre en considération une notion de cône de services comme commenté précédemment, soit dans la façon de générer ces requêtes dans les organes de valorisation, soit dans la façon de les traiter.

Le domaine SI du CC&B a la capacité de traiter de façon non brutale de tels cas d'interruption de session, en s'appuyant sur une connaissance en temps réel de l'état des sessions initiées par l'utilisateur du terminal 3G. Plus précisément, l'invention prévoit un mécanisme de gestion fonctionnellement centralisée du contexte de l'ensemble des sessions de services initiées par chaque abonné 3G. Un composant SI du domaine CC&B (au sens large) doit donc héberger et gérer de façon centralisée les contextes de sessions de services 3G. Ce composant fonctionnel SI 20 est appelé ici "gestionnaire de contextes".

Conformément à l'invention, le gestionnaire de contextes 20 est informé en temps réel des débuts et fins de sections atomiques par la plate-forme de supervision 10, et il tient à jour pour chaque session 3G en cours pour un abonné une variable booléenne dont la valeur indique si cette session se trouve ou non dans une section atomique.

Un composant SI émetteur d'une demande d'interruption de session (par exemple le système de valorisation 17) transmet alors sa requête au gestionnaire de contextes 20 qui examine la situation globale des activités de l'abonné. Si une de ses sessions actives est dans une section atomique, alors le gestionnaire de contextes 20 va pouvoir conformément à une logique économique du service concerné, attendre la fin de cette section atomique pour répercuter l'ordre d'interruption. Une temporisation de garde peut être prévue afin de protéger l'opérateur contre une utilisation anormalement longue d'une section atomique.

Le mécanisme ci-dessus apporte donc à l'opérateur des moyens techniques lui permettant de maîtriser et différencier le traitement des cas d'interruptions de sessions de services 3G.

Le gestionnaire de contextes 20 peut être intégré dans un composant SI déjà existant de l'opérateur, par exemple la plate-forme de supervision 10 ou le portail 12. Il peut aussi constituer un équipement séparé comme montré schématiquement sur la figure 1.

Le procédé requiert une conception et une programmation adéquate de la plate-forme de supervision 10 pour qu'elle détecte des événements interprétés comme des débuts et fins de sections atomiques pour chaque session de chaque abonné.

Les sections atomiques sont d'abord identifiées par le concepteur d'un service 3G, de même que les événements qui marquent leur début et leur fin. Son serveur applicatif peut disposer d'un "agent" lui permettant de communiquer avec la plate-forme 10 de type "SCP-Like Content Mediation" pour spécifier différents événements à détecter dans le trafic IP en relation avec le service (début/fin, de session du service, début/fin de section atomique dans une telle session, ...) et les actions à entreprendre, comprenant des notifications à adresser au gestionnaire de contextes 20 pour qu'il tienne à jour le contexte des sessions en cours pour l'abonné. Le fournisseur de service peut ainsi définir, avec un protocole applicatif approprié et sécurisé, les données du modèle d'information de son service.

Plusieurs modes opératoires peuvent être utilisés par l'agent logiciel mis à disposition du concepteur ou développeur de services. Une possibilité consiste en la soumission de formulaires de format prédéfini, par exemple sous forme de pages HTML ("HyperText Markup Language"), que l'agent remplit et transmet à la plate-forme 10 sur la base de données saisies par l'utilisateur. Une autre possibilité consiste à prévoir un échange de messages successifs entre l'agent et un module logiciel complémentaire de la plate-forme 10 au cours duquel l'agent établit une session de communication avec la plate-forme, permettant à l'utilisateur d'indiquer d'abord son souhait de spécifier une section atomique pour un service donné puis d'être questionné pour définir les événements de début ou de fin de la section atomique ainsi que des paramètres optionnels (par exemple le paramètre de temporisation T₀ évoqué plus loin).

Dans l'exemple particulier d'un service d'enchères, comme évoqué plus haut, la plate-forme de supervision 10 sera programmée pour détecter les messages correspondant aux étapes B/ (le client 8 envoie un message pour déposer une enchère) et E/ (le serveur 13 notifie la clôture de l'enchère déposée et confirmée) conformément au format de ces messages adoptés dans l'implémentation du service.

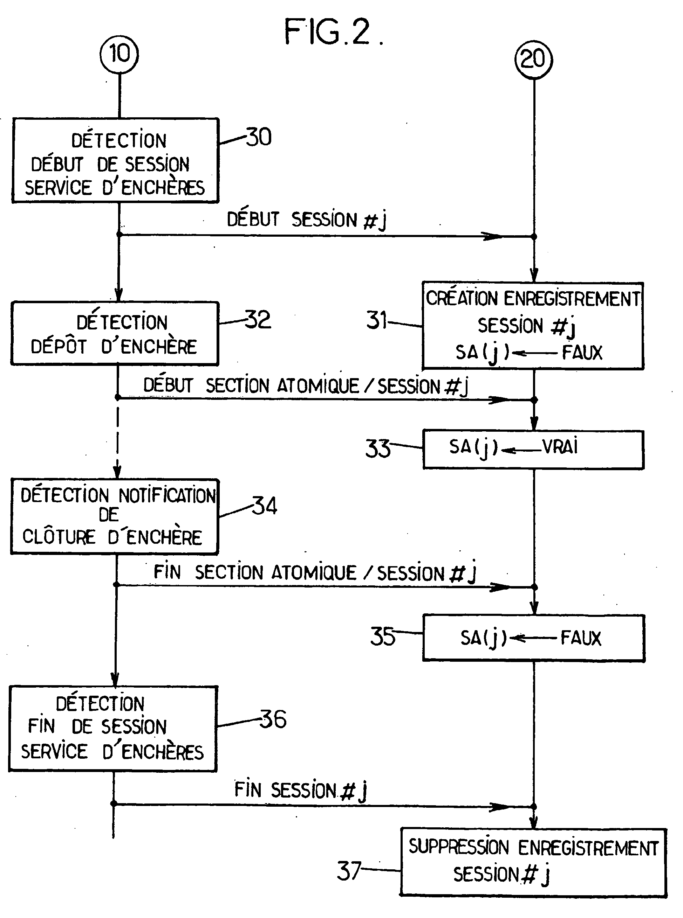

Lors du déroulement du service, la plate-forme de supervision 10 et le gestionnaire de contextes 20 coopèrent par exemple de la manière illustrée sur la figure 2.

L'établissement d'une session du service pour un abonné est d'abord détectée par la plate-forme 10 (étape 30), qui en informe le gestionnaire de contextes 20 avec un numéro de session (j), pour que celui-ci crée un enregistrement pour cette session (étape 31), en initialisant à la valeur FAUX l'indicateur booléen SA(j) de section atomique. Si l'abonné n'avait auparavant aucune session en cours, l'étape 31 comporte la création d'un contexte pour l'abonné avec le premier enregistrement. Si l'abonné entre dans une section atomique prédéfinie (dans notre exemple, il dépose une enchère), le message correspondant est détecté par la plate-forme 10 (étape 32), qui avise en temps réel le gestionnaire de contextes 20 du début de section atomique dans session n° j. Le gestionnaire de contextes 20 met alors à jour l'indicateur de section atomique SA(j) à l'étape 33 en lui affectant la valeur VRAI, et il note l'heure à laquelle il a été avisé du début de la section atomique. La plate-forme de supervision 10 signale aussi au gestionnaire de contextes 20 la sortie de la section atomique, détectée à l'étape 34, pour que le gestionnaire de contextes mette à jour l'indicateur de section atomique SA(j) à l'étape 35 en lui affectant la valeur FAUX. Suite à la fermeture de la session, détectée à l'étape 36 par la plate-forme 10, le gestionnaire de contextes 20 supprime l'enregistrement relatif à la session j (ainsi que le contexte de l'abonné si celui-ci n'a plus aucune session de service 3G en cours).

Un processus du genre illustré par la figure 2 est mené pour chaque type de section atomique défini pour chaque service 3G supportant la fonctionnalité.

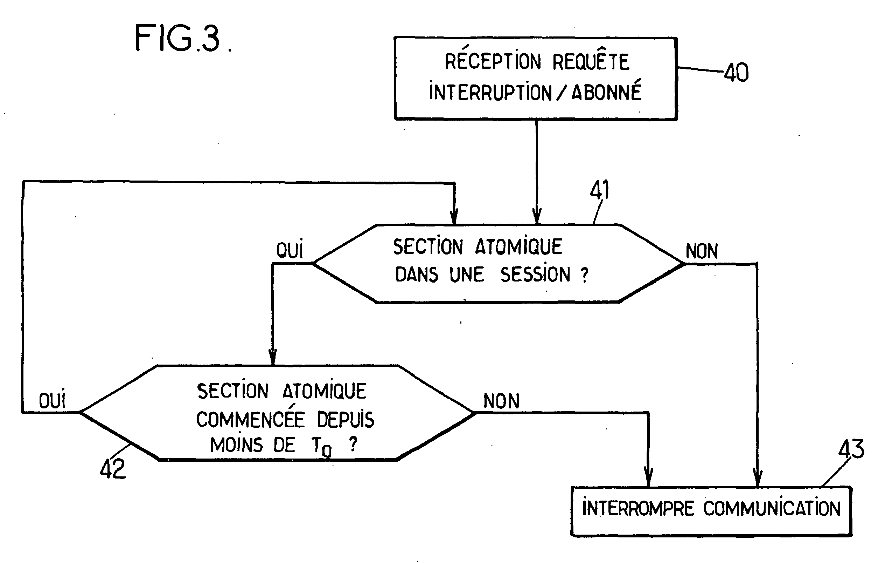

La figure 3 illustre un exemple de traitement que peut appliquer le gestionnaire de contextes 20 suite à la réception (étape 40) d'une requête d'interruption de communication pour un abonné identifié, par exemple générée par le système de valorisation 17.

Le gestionnaire 20 consulte le contexte qu'il mémorise pour l'abonné en question (étape 41) pour déterminer si celui-ci a une section atomique en cours (SA(j) = VRAI pour une session j de l'abonné). Dans l'affirmative, il compare l'heure courante à l'heure de début de section atomique notée dans l'enregistrement j, pour déterminer si la section atomique a commencé depuis moins d'une durée prédéfinie T₀, par exemple de l'ordre de la minute (étape 42). Si cette durée T₀ n'est pas dépassée, on revient au test 41, c'est-à-dire que la requête d'interruption n'est pas servie à moins que l'indicateur SA(j) repasse à la valeur FAUX. L'interruption de communication n'est validée par le gestionnaire de contextes 20 (étape 43) que quand le test 41 ne révèle aucune section atomique en cours, ou quand le test 42 montre que la temporisation T₀ a expiré. Le gestionnaire de contextes 20 commande alors la plate-forme de supervision 10 pour qu'elle notifie au client l'interruption imminente, puis le réseau coeur 2 pour que celui-ci mette fin à la communication.

La validation d'interruption effectuée à l'étape 43 ne porte pas nécessairement sur l'ensemble des sessions en cours pour l'abonné considéré, particulièrement dans des cas de valorisation différenciée des services.

La requête d'interruption reçue à l'étape 40 peut notamment être sélective, c'est-à-dire ne porter que sur certaines des sessions en cours pour l'abonné, le filtrage des étapes 41 et 42 étant limité à ces sessions. Un tel cas peut se produire si le système de valorisation 17 incorpore une logique de traitement de cônes de services et formule ses requêtes d'interruption en conséquence.

Dans une autre réalisation, la logique de traitement des cônes de services est au moins partiellement présente au niveau du gestionnaire de contextes 20 qui, lorsqu'il reçoit une requête d'interruption pour un service donné, tient compte de cette logique dans la consultation des indicateurs de section atomique et dans les décisions d'interrompre les services.

La temporisation T₀ est optionnelle. Elle sert à protéger l'opérateur contre un usage abusif des sections atomiques par le client. Dans la même optique, il peut également être prévu un mécanisme empêchant le client de commencer une nouvelle section atomique dans une circonstance où une interruption de communication sollicitée par un composant SI du CC&B ne serait pas effectuée tout de suite à cause d'une section atomique déjà en cours. La plate-forme de supervision 10 est alors commandée pour répondre à la détection pour cet abonné d'un événement de type début de section atomique en lui notifiant qu'il ne peut pas être donné suite à son action.

La durée T₀ peut être choisie au niveau du gestionnaire de contextes 20. Elle peut aussi dépendre du service ou du type de section atomique considéré, et être choisie par le concepteur du service et spécifiée à la plate-forme de supervision 10 par l'agent mis à disposition du concepteur de services. Plusieurs modalités sont alors envisageables pour la mise en oeuvre de la temporisation. L'une d'elles consiste en ce que la plate-forme 10 signale une fin de section atomique au gestionnaire 20 lorsque la temporisation, décomptée par cette plate-forme 10 depuis le début de cette section atomique, a expiré. Une autre possibilité est que la plate-forme 10 indique la durée T₀ à prendre en considération au gestionnaire 20 en même temps qu'elle signale le début de la section atomique.

## Revendications

1. Procédé de fourniture de services en ligne, dans lequel une plate-forme de supervision de sessions de service (10) est placée entre un réseau d'accès (1) et un noeud d'entrée (12) d'un réseau d'hébergement de services, le procédé comprenant les étapes suivantes en relation avec au moins un service :
- définir a priori, dans le déroulement dudit service, au moins une section atomique consistant en une séquence d'événements déterminée intervenant dans des échanges de messages avec un abonné, et identifier un premier événement au début de la section atomique et au moins un second événement à la fin de la section atomique ; et
- configurer la plate-forme de supervision pour qu'elle détecte les événements identifiés dans une session dudit service en cours pour un abonné par l'intermédiaire du réseau d'accès et signale un début de section atomique pour ledit abonné en réponse à la détection du premier événement et une fin de section atomique pour ledit abonné en réponse à la détection d'un second événement,
dans lequel une requête d'interruption de communication d'un abonné est traitée en examinant si une section atomique est en cours pour ledit abonné d'après les débuts et fins de section atomique signalés par la plate-forme de supervision afin de décider si la communication doit au moins en partie être immédiatement interrompue.

2. Procédé selon la revendication 1, dans lequel, en réponse à une requête d'interruption de communication pour un abonné, on empêche l'interruption immédiate de la communication lorsque ledit abonné a une section atomique en cours pour au moins un service.

3. Procédé selon la revendication 1, dans lequel, en réponse à une requête d'interruption de communication pour un abonné, on empêche l'interruption immédiate de la communication lorsque ledit abonné a une section atomique en cours pour au moins un service depuis moins qu'une durée prédéterminée (T₀).

4. Procédé selon la revendication 3, dans laquelle ladite durée prédéterminée (T₀) est spécifiée à la plate-forme de supervision (10) pour chaque section atomique.

5. Procédé selon l'une quelconque des revendications précédentes, dans lequel un gestionnaire de contextes (20) est prévu pour communiquer avec différentes unités fonctionnelles incluant la plate-forme de supervision (10) afin de mémoriser des informations sur des sessions de service en cours pour des abonnés par l'intermédiaire du réseau d'accès (1), lesdites informations comprenant un indicateur de section atomique tenu à jour pour chaque abonné sur la base des débuts et fins de section atomique signalés par la plate-forme de supervision.

6. Procédé selon l'une quelconque des revendications précédentes, dans lequel le réseau d'accès comprend un réseau cellulaire de radiocommunication (1).

7. Procédé selon l'une quelconque des revendications précédentes, dans lequel le noeud d'entrée du réseau d'hébergement de services comprend un portail Internet (12).

8. Système de contrôle de services en ligne, comprenant une plate-forme de supervision de sessions de service (10) placée entre un réseau d'accès (1) et un noeud d'entrée (12) d'un réseau d'hébergement de services, et un gestionnaire de contextes (20) pour communiquer avec différentes unités fonctionnelles incluant la plate-forme de supervision afin de mémoriser des informations sur des sessions de service en cours pour des abonnés par l'intermédiaire du réseau d'accès, dans lequel au moins une section atomique consistant en une séquence d'événements déterminée intervenant dans des échanges de messages avec un abonné est définie a priori dans le déroulement d'au moins un service en identifiant un premier événement au début de la section atomique et au moins un second événement à la fin de la section atomique, la plate-forme de supervision (10) comprenant des moyens pour détecter les événements identifiés dans une session dudit service en cours pour un abonné par l'intermédiaire du réseau d'accès et pour signaler au gestionnaire de contextes (20) un début de section atomique pour ledit abonné en réponse à la détection du premier événement et une fin de section atomique pour ledit abonné en réponse à la détection d'un second événement, le gestionnaire de contextes comprenant des moyens pour tenir à jour un indicateur de section atomique mémorisé pour chaque abonné sur la base des débuts et fins de section atomique signalés par la plate-forme de supervision et pour traiter une requête d'interruption de communication d'un abonné en fonction de l'indicateur de section atomique mémorisé pour ledit abonné afin de décider si la communication doit au moins en partie être immédiatement interrompue.

9. Plate-forme de supervision de sessions de service pour un système de contrôle de services en ligne, comprenant:
- des moyens de raccordement d'une part à un réseau d'accès (1) et d'autre part à un noeud d'entrée (12) d'un réseau d'hébergement de services;
- des moyens pour dialoguer avec un serveur applicatif gérant au moins un service en ligne de façon à recevoir dudit serveur applicatif des éléments de spécification d'au moins une section atomique consistant en une séquence d'événements déterminée intervenant dans des échanges de messages avec un abonné dans le déroulement d'au moins un service, lesdits éléments de spécification décrivant un premier événement au début de la section atomique et au moins un second événement à la fin de la section atomique;
- des moyens d'analyse de trafic transitant entre le réseau d'accès et le noeud d'entrée du réseau d'hébergement de services pour détecter lesdits premier et second événements dans une session dudit service en cours pour un abonné par l'intermédiaire du réseau d'accès; et
- des moyens de communication avec un gestionnaire de contextes (20) mémorisant des informations sur des sessions de service en cours pour des abonnés par l'intermédiaire du réseau d'accès, incluant au moins un indicateur de section atomique, pour signaler au gestionnaire de contextes (20) un début de section atomique pour ledit abonné en réponse à la détection du premier événement et une fin de section atomique pour ledit abonné en réponse à la détection d'un second événement.

10. Plate-forme de supervision selon la revendication 9, dans laquelle les éléments de spécification d'au moins une section atomique incluent une durée de temporisation (T₀) associée à ladite section atomique, telle que la section atomique est considérée comme terminée lorsque la durée de temporisation s'est écoulée depuis le début de la section atomique.

11. Gestionnaire de contextes pour un système de contrôle de services en ligne, comprenant:
- des moyens de communication avec différentes unités fonctionnelles incluant une plate-forme de supervision de sessions de service (10) placée entre un réseau d'accès (1) et un noeud d'entrée (12) d'un réseau d'hébergement de services;
- des moyens de mémorisation d'informations sur des sessions de service en cours pour des abonnés par l'intermédiaire du réseau d'accès, lesdites informations incluant, pour au moins une session de service en cours pour un abonné, un indicateur de section atomique tenu à jour sur la base de débuts et fins de section atomique signalés par la plate-forme de supervision; et
- des moyens de traitement d'une requête d'interruption de communication d'un abonné en fonction de l'indicateur de section atomique mémorisé pour ledit abonné afin de décider si la communication doit au moins en partie être immédiatement interrompue.

12. Gestionnaire de contextes selon la revendication 11, dans lequel les moyens de traitement de la requête d'interruption sont agencés pour décider sélectivement quelles sessions en cours pour l'abonné sont à interrompre.

13. Gestionnaire de contextes selon la revendication 12, dans lequel la décision sélective est effectuée sur la base de sessions spécifiées dans la requête d'interruption, en tenant compte des indicateurs de section atomique mémorisés pour l'abonné.

14. Gestionnaire de contextes selon la revendication 12, dans lequel la décision sélective est effectuée conformément à une logique prédéterminée de hiérarchie des services, en tenant compte des indicateurs de section atomique mémorisés pour l'abonné.

15. Agent logiciel pour un développeur de services en ligne, comprenant des instructions pour effectuer les opérations suivantes lors d'une exécution de l'agent logiciel dans une machine informatique communiquant avec une plate-forme de supervision de sessions de service (10) placée entre un réseau d'accès (1) et un noeud d'entrée (12) d'un réseau d'hébergement de services:
- définition, dans le déroulement d'un service, d'au moins une section atomique consistant en une séquence d'événements déterminée intervenant dans des échanges de messages avec un abonné;
- identification d'un premier événement au début de la section atomique et d'au moins un second événement à la fin de la section atomique ; et
- configuration de la plate-forme de supervision pour qu'elle détecte les événements identifiés dans une session dudit service en cours pour un abonné par l'intermédiaire du réseau d'accès et signale un début de section atomique pour ledit abonné en réponse à la détection du premier événement et une fin de section atomique pour ledit abonné en réponse à la détection d'un second événement.

16. Agent logiciel selon la revendication 15, dans lequel l'opération de configuration de la plate-forme de supervision (10) effectuée lors de l'exécution de l'agent logiciel comprend une configuration de la plate-forme de supervision pour qu'elle signale les débuts et fins de section atomique à un gestionnaire de contextes (20) mémorisant des informations sur des sessions de service en cours pour des abonnés par l'intermédiaire du réseau d'accès, incluant au moins un indicateur de section atomique.

17. Agent logiciel selon la revendication 15 ou 16, dans lequel l'opération de configuration de la plate-forme de supervision (10) effectuée lors de l'exécution de l'agent logiciel comprend la spécification d'une durée de temporisation (T₀) associée à au moins une section atomique, telle que la section atomique est considérée comme terminée lorsque la durée de temporisation s'est écoulée depuis le début de la section atomique.

## Claims

1. An on-line service provision method, wherein a service session supervision platform (10) is placed between an access network (1) and an input node (12) of a service-hosting network, the method comprising the following steps in relation to at least one service:
- a priori defining, in the running of said service, at least one atomic section consisting of a determined sequence of events involved in message exchanges with a subscriber, and identifying a first event at the start of the atomic section and at least one second event at the end of the atomic section; and
- configuring the supervision platform so that it detects the events identified in a session of said service in progress for a subscriber via the access network and flags a start of atomic section for said subscriber in response to the detection of the first event and an end of atomic section for said subscriber in response to the detection of a second event,
wherein a communication interrupt request from a subscriber is processed by ascertaining whether an atomic section is in progress for said subscriber according to the atomic section beginnings and ends flagged by the supervision platform, in order to determine whether the communication must at least partly be interrupted immediately.

2. The method as claimed in claim 1, wherein, in response to a communication interrupt request for a subscriber, the immediate interruption of the communication is prevented when said subscriber has an ongoing atomic section for at least one service.

3. The method as claimed in claim 1, wherein, in response to a communication interrupt request for a subscriber, the immediate interruption of the communication is prevented when said subscriber has an ongoing atomic section for at least one service started less than a predetermined time (T₀) ago.

4. The method as claimed in claim 3, wherein said predetermined duration (T₀) is specified to the supervision platform (10) for each atomic section.

5. The method as claimed in any one of the preceding claims, wherein a context handler (20) is provided to communicate with different functional units including the supervision platform (10), to store information on service sessions in progress for subscribers via the access network (1), said information comprising an atomic section indicator kept up-to-date for each subscriber based on atomic section beginnings and ends flagged by the supervision platform.

6. The method as claimed in any one of the preceding claims, wherein the access network comprises a cellular radio communication network (1).

7. The method as claimed in any one of the preceding claims, wherein the input node of the service-hosting network comprises an Internet portal (12).

8. An on-line service control system, comprising a service session supervision platform (10) placed between an access network (1) and an input node (12) of a service-hosting network, and a context handler (20) to communicate with different functional units including the supervision platform in order to store information on service sessions in progress for subscribers via the access network, wherein at least one atomic section consisting of a determined sequence of events which are involved in message exchanges with a subscriber is a priori defined in the running of at least one service by identifying a first event at the start of the atomic section and at least one second event at the end of the atomic section, the supervision platform (10) including means for detecting the events identified in a session of said service in progress for a subscriber via the access network and for flagging to the context handler (20) a start of atomic section for said subscriber in response to the detection of the first event and an end of atomic section for said subscriber in response to the detection of a second event, the context handler including means of keeping an atomic section indicator stored for each subscriber up-to-date on the basis of atomic section beginnings and ends flagged by the supervision platform and of processing a communication interrupt request from a subscriber according to the atomic section indicator stored for said subscriber in order to determine whether the communication must at least partly be interrupted immediately.

9. A service session supervision platform for an on-line service control system, comprising:
- means of connection on the one hand to an access network (1) and on the other hand to an input node (12) of a service-hosting network;
- means for communicating with an application server managing at least one on-line service so as to receive from said application server specification elements of at least one atomic section consisting of a determined sequence of events involved in message exchanges with a subscriber in the running of at least one service, said specification elements describing a first event at the start of the atomic section and at least one second event at the end of the atomic section;
- means of analyzing traffic passing between the access network and the input node of the service-hosting network to detect said first and second events in a session of said service in progress for a subscriber via the access network; and
- means of communication with a context handler (20) storing information on service sessions in progress for subscribers via the access network, including at least one atomic section indicator, to flag to the context handler (20) a start of atomic section for said subscriber in response to the detection of the first event and an end of atomic section for said subscriber in response to the detection of a second event.

10. The supervision platform as claimed in claim 9, wherein the specification elements of at least one atomic section include a timer duration (T₀) associated with said atomic section, such that the atomic section is considered to be finished when the timer duration has elapsed since the start of the atomic section.

11. A context handler for an on-line service control system, comprising:
- means of communication with different functional units including a service session supervision platform (10) placed between an access network (1) and an input node (12) of a service-hosting network;
- means of storing information on service sessions in progress for subscribers via the access network, said information including, for at least one service session in progress for a subscriber, an atomic section indicator kept up-to-date on the basis of atomic section beginnings and ends flagged by the supervision platform; and
- means of processing a communication interrupt request from a subscriber according to the atomic section indicator stored for said subscriber in order to determine whether the communication must at least partly be interrupted immediately.

12. The context handler as claimed in claim 11, wherein the interrupt request processing means are arranged to determine selectively which current sessions for the subscriber are to be interrupted.

13. The context handler as claimed in claim 12, wherein the selective determination is performed on the basis of sessions specified in the interrupt request, taking into account atomic section indicators stored for the subscriber.

14. The context handler as claimed in claim 12, wherein the selective determination is performed according to a predefined service hierarchy logic, taking into account atomic section indicators stored for the subscriber.

15. A software agent for an on-line service developer, comprising instructions for performing the following operations on running the software agent in a computer machine communicating with a service session supervision platform (10) placed between an access network (1) and an input node (12) of a service-hosting network:
- determination, in the running of a service, of at least one atomic section consisting of a determined sequence of events involved in message exchanges with a subscriber;
- identification of a first event at the start of the atomic section and of at least one second event at the end of the atomic section; and
- configuration of the supervision platform so that it detects the events identified in a session of said service in progress for a subscriber via the access network and flags a start of atomic section for said subscriber in response to the detection of the first event and an end of atomic section for said subscriber in response to the detection of a second event.

16. The software agent as claimed in claim 15, wherein the supervision platform (10) configuration operation performed on running the software agent includes a configuration of the supervision platform so that it flags atomic section beginnings and ends to a context handler (20) storing information on service sessions in progress for subscribers via the access network, including at least one atomic section indicator.

17. The software agent as claimed in claim 15 or 16, wherein the supervision platform (10) configuration operation performed on running the software agent includes the specification of a timer duration (T₀) associated with at least one atomic section, such that the atomic section is considered to be ended when the timer duration has elapsed since the start of the atomic section.

## Patentansprüche

1. Online-Dienstbereitstellungsverfahren, bei dem eine Überwachungsplattform von Dienstperioden (10) zwischen einem Zugriffsnetz (1) und einem Eingangsknoten (12) eines Dienstaufnahmenetzes angeordnet ist, wobei das Verfahren die folgenden Schritte in Verbindung mit mindestens einem Dienst umfasst:
- a priori Definition von mindestens einer Atomsektion in der Dienstabwicklung, die in einer bestimmten Sequenz von Ereignissen besteht, die beim Austausch von Botschaften mit einem Teilnehmer vorkommen, und Identifikation eines ersten Ereignisses am Beginn der Atomsektion und mindestens eines zweiten Ereignisses am Ende der Atomsektion; und
- Konfiguration der Überwachungsplattform, so dass sie die in einer Periode des in Betrieb befindlichen Dienstes für einen Teilnehmer über das Zugriffsnetz identifizierten Ereignisse erfasst und einen Anfang einer Atomsektion für den Teilnehmer als Antwort auf die Erfassung des ersten Ereignisses und ein Ende einer Atomsektion für den Teilnehmer als Antwort auf die Erfassung eines zweiten Ereignisses signalisiert,
bei dem ein Antrag auf Unterbrechung der Kommunikation eines Teilnehmers bearbeitet wird, wobei geprüft wird, ob eine Atomsektion für den Teilnehmer nach dem von der Überwachungsplattform signalisierten Anfang und Ende einer Atomsektion in Betrieb ist, um zu entscheiden, ob die Kommunikation zumindest teilweise sofort unterbrochen werden soll.

2. Verfahren nach Anspruch 1, bei dem als Antwort auf einen Antrag auf Unterbrechung der Kommunikation für einen Teilnehmer die sofortige Unterbrechung der Kommunikation verhindert wird, wenn der Teilnehmer für mindestens einen Dienst eine Atomsektion in Betrieb hat.

3. Verfahren nach Anspruch 1, bei dem als Antwort auf einen Antrag auf Unterbrechung der Kommunikation für einen Teilnehmer die sofortige Unterbrechung der Kommunikation verhindert wird, wenn der Teilnehmer für mindestens einen Dienst seit weniger als eine vorbestimmte Dauer (T₀) eine Atomsektion in Betrieb hat.

4. Verfahren nach Anspruch 3, bei dem die vorbestimmte Dauer (T₀) an der Überwachungsplattform (10) für jede Atomsektion spezifiziert ist.

5. Verfahren nach einem der vorhergehenden Ansprüche, bei dem ein Kontextverwalter (20) vorgesehen ist, um mit verschiedenen Funktionseinheiten inklusive der Überwachungsplattform (10) zu kommunizieren, um Informationen über in Betrieb befindliche Dienstperioden für Teilnehmer über das Zugriffsnetz (1) zu speichern, wobei diese Informationen einen Indikator einer Atomsektion umfassen, der für jeden Teilnehmer auf Basis des Anfangs und des Endes einer Atomsektion, die von der Überwachungsplattform signalisiert werden, aktuell gehalten wird.

6. Verfahren nach einem der vorhergehenden Ansprüche, bei dem das Zugriffsnetz ein zelluläres Funkkommunikationsnetz (1) umfasst.

7. Verfahren nach einem der vorhergehenden Ansprüche, bei dem der Eingangsknoten des Dienstaufnahmenetzes ein Internet-Portal (12) umfasst.

8. Online-Dienstkontrollsystem, umfassend eine Überwachungsplattform von Dienstperioden (10), die zwischen einem Zugriffsnetz (1) und einem Eingangsknoten (12) eines Dienstaufnahmenetzes angeordnet ist, und einen Kontextverwalter (20), um mit verschiedenen Funktionseinheiten inklusive der Überwachungsplattform zu kommunizieren, um Informationen über in Betrieb befindliche Dienstperioden für Teilnehmer über das Zugriffsnetz zu speichern, bei dem mindestens eine Atomsektion, die in einer bestimmten Sequenz von Ereignissen besteht, die beim Austausch von Botschaften mit einem Teilnehmer a priori in der Abwicklung von mindestens einem Dienst definiert ist, wobei ein erstes Ereignis am Anfang der Atomsektion und mindestens ein zweites Ereignis am Ende der Atomsektion identifiziert wird, wobei die Überwachungsplattform (10) Mittel umfasst, um die in einer Periode des in Betrieb befindlichen Dienstes für einen Teilnehmer identifizierten Ereignisse über das Zugriffsnetz zu erfassen und dem Kontextverwalter (20) einen Anfang einer Atomsektion für den Teilnehmer als Antwort auf die Erfassung des ersten Ereignisses und ein Ende einer Atomsektion für den Teilnehmer als Antwort auf die Erfassung eines zweiten Ereignisses zu signalisieren, wobei der Kontextverwalter Mittel umfasst, um einen Indikator einer Atomsektion, der für jeden Teilnehmer gespeichert ist, auf Basis des Anfangs und des Endes einer Atomsektion, die von der Überwachungsplattform signalisiert werden, aktuell zu halten und einen Antrag auf Unterbrechung der Kommunikation eines Teilnehmers in Abhängigkeit von dem Indikator der Atomsektion, der für diesen Teilnehmer gespeichert ist, zu bearbeiten, um zu entscheiden, ob die Kommunikation zumindest teilweise sofort unterbrochen werden soll.

9. Überwachungsplattform von Dienstperioden für ein Online-Dienstkontrollsystem, umfassend:
- Mittel zum Anschließen einerseits an ein Zugriffsnetz (1) und andererseits an einen Eingangsknoten (12) eines Dienstaufnahmenetzes;
- Mittel, um mit einem Anwendungsserver in Dialog zu treten, der mindestens einen Online-Dienst steuert, um von dem Anwendungsserver Elemente zur Spezifizierung mindestens einer Atomsektion zu erhalten, bestehend in einer bestimmten Sequenz von Ereignissen, die beim Austausch von Botschaften mit einem Teilnehmer bei der Abwicklung von mindestens einem Dienst zum Einsatz kommt, wobei die Spezifizierungselemente ein erstes Ereignis am Anfang der Atomsektion und mindestens ein zweites Ereignis am Ende der Atomsektion beschreiben;
- Mittel zur Analyse des zwischen dem Zugriffsnetz und dem Eingangsknoten des Dienstaufnahmenetzes durchfließenden Verkehrs, um das erste und das zweite Ereignis in einer Periode des in Betrieb befindlichen Dienstes für einen Teilnehmer über das Zugriffsnetz zu erfassen; und
- Mittel zur Kommunikation mit einem Kontextverwalter (20), der Informationen über in Betrieb befindliche Dienstperioden für Teilnehmer über das Zugriffsnetz speichert, umfassend mindestens einen Indikator einer Atomsektion, um dem Kontextverwalter (20) einen Anfang einer Atomsektion für den Teilnehmer als Antwort auf die Erfassung des ersten Ereignisses und ein Ende einer Atomsektion für den Teilnehmer als Antwort auf die Erfassung eines zweiten Ereignisses zu signalisieren.

10. Überwachungsplattform nach Anspruch 9, bei der die Spezifizierungselemente mindestens einer Atomsektion eine Verzögerungszeit (T₀) in Verbindung mit der Atomsektion einschließen, so dass die Atomsektion als beendet angesehen wird, wenn die Verzögerungszeit vom Anfang der Atomsektion abgelaufen ist.

11. Kontextverwalter für ein Online-Dienstkontrollsystem, umfassend:
- Mittel zur Kommunikation mit verschiedenen Funktionseinheiten, einschließlich einer Überwachungsplattform von Dienstperioden (10), die zwischen einem Zugriffsnetz (1) und einem Eingangsknoten (12) eines Dienstaufnahmenetzes angeordnet ist;
- Mittel zur Speicherung von Informationen über in Betrieb befindliche Dienstperioden für Teilnehmer über das Zugriffsnetz, wobei die Informationen für mindestens eine in Betrieb befindliche Dienstperiode für einen Teilnehmer einen Indikator einer Atomsektion einschließen, der auf Basis des Anfangs und Endes einer Atomsektion, die von der Überwachungsplattform signalisiert werden, aktuell gehalten wird; und
- Mittel zur Bearbeitung eines Antrags auf Unterbrechung der Kommunikation eines Teilnehmers in Abhängigkeit vom Indikator der Atomsektion, der für den Teilnehmer gespeichert ist, um zu entscheiden, ob die Kommunikation zumindest teilweise sofort unterbrochen werden soll.

12. Kontextverwalter nach Anspruch 11, bei dem die Mittel zur Bearbeitung des Unterbrechungsantrags derart angeordnet sind, dass sie selektiv entscheiden, welche in Betrieb befindliche Perioden für den Teilnehmer zu unterbrechen sind.

13. Kontextverwalter nach Anspruch 12, bei dem die selektive Entscheidung auf Basis von in dem Unterbrechungsantrag spezifizierten Perioden unter Berücksichtigung der für den Teilnehmer gespeicherten Indikatoren der Atomsektion erfolgt.

14. Kontextverwalter nach Anspruch 12, bei dem die selektive Entscheidung gemäß einer vorbestimmten Logik der Hierarchie der Dienste unter Berücksichtigung der für den Teilnehmer gespeicherten Indikatoren der Atomsektion erfolgt.

15. Software-Agent für einen Online-Dienstentwickler, umfassend Instruktionen zur Durchführung der folgenden Schritte bei einer Ausführung des Software-Agents in einer Informatikeinheit, die mit einer Überwachungsplattform von Dienstperioden (10) kommuniziert, die zwischen einem Zugriffsnetz (1) und einem Eingangsknoten (12) eines Dienstaufnahmenetzes angeordnet ist:
- in der Abwicklung eines Dienstes Definition mindestens einer Atomsektion, bestehend in einer bestimmten Sequenz von Ereignissen, die beim Austausch von Botschaften mit einem Teilnehmer zum Einsatz kommt;
- Identifikation eines ersten Ereignisses am Anfang der Atomsektion und mindestens eines zweiten Ereignisses am Ende der Atomsektion; und
- Konfiguration der Überwachungsplattform, so dass sie die in einer Periode des in Betrieb befindlichen Dienstes identifizierten Ereignisse für einen Teilnehmer über das Zugriffsnetz erfasst und einen Anfang einer Atomsektion für den Teilnehmer als Antwort auf die Erfassung des ersten Ereignisses und ein Ende einer Atomsektion für den Teilnehmer als Antwort auf die Erfassung eines zweiten Ereignisses signalisiert.

16. Software-Agent nach Anspruch 15, bei dem der Schritt der Konfiguration der Überwachungsplattform (10), der bei der Ausführung des Software-Agents erfolgt, eine derartige Konfiguration der Überwachungsplattform umfasst, dass sie einen Anfang und ein Ende einer Atomsektion einem Kontextverwalter (20) signalisiert, der Informationen über in Betrieb befindliche Dienstperioden für Teilnehmer über das Zugriffsnetz speichert, einschließlich mindestens eines Indikators einer Atomsektion.

17. Software-Agent nach Anspruch 15 oder 16, bei dem der Schritt der Konfiguration der Überwachungsplattform (10), der bei der Ausführung des Software-Agents erfolgt, die Spezifizierung einer Verzögerungszeit (T₀) in Verbindung mit mindestens einer Atomsektion umfasst, so dass die Atomsektion als beendet angesehen wird, wenn die Verzögerungszeit seit Beginn der Atomsektion abgelaufen ist.
